# EUROPÄISCHE PATENTSCHRIFT

(11) **EP 1 225 113 B1**
(45) Veröffentlichungstag und Bekanntmachung des Hinweises auf die Patenterteilung: **12.04.2006**
(21) Anmeldenummer: 01127677.1
(22) Anmeldetag: 21.11.2001
(51) Int. Cl.: B61D 27/00, B60H 1/00

(54) **Heizsystem für elektrisch angetriebene Fahrzeuge**
Heating system for electrically driven vehicles
Système de chauffage pour véhicules à propulsion électrique

(30) Priorität: 18.01.2001 DE 10101994
(43) Veröffentlichungstag der Anmeldung: 24.07.2002
(73) Patentinhaber: Voith Turbo GmbH & Co. KG, 89522 Heidenheim (DE)
(72) Erfinder: Lange, Andreas, Dr., 89551 Zang (DE); Mühlberger, Uwe, 89522 Heidenheim (DE)
(74) Vertreter: Dr. Weitzel & Partner

(56) Entgegenhaltungen:
- DE-A- 19 545 449
- DE-A- 19 755 193
- FR-A- 2 806 666

## Beschreibung

Die Erfindung betrifft ein Heizsystem für elektrisch angetriebene Fahrzeuge. Dabei sind insbesondere Fahrzeuge gemeint, deren Spannungsversorgung über eine Oberleitung erfolgt. Heizsystem für elektrisch angetriebene Fahrzeuge sind zum Beispiel durch die DE-A1-195 45 449 bekannt und entsprechen dem Oberbegriff von Anspruch 1.

Bei elektrisch angetriebenen Fahrzeugen fehlt zum Heizen des Fahrgastraumes das Kühlwasser eines Verbrennungsmotors. Bisher wurde daher Luft mittels doppelt isolierter Heizdrähte erwärmt und in den Fahrgastraum geblasen. Der Einsatz herkömmlicher warmwassergespeister Klimaaggregate, wie sie in Fahrzeugen mit Verbrennungsmotor eingesetzt werden, war insbesondere aufgrund der hohen Sicherheitsanforderungen bezüglich der Isolierung von spannungsversorgten Teilen nicht möglich. Die Sicherheitsvorschriften sagen nämlich aus, daß zwischen elektrischer Spannungsversorgung und Fahrzeugmasse eine doppelte Isolierung vorhanden sein muß.

Der Erfindung liegt die Aufgabe zugrunde, ein Heizsystem für elektrisch angetriebene Fahrzeuge insbesondere für oberleitungsspannungsversorgte, doppelt isolierte Fahrzeuge darzustellen, bei dem der Einsatz herkömmlicher mit einem Heizmittelkreislauf versehener Klimaaggregate möglich ist.

Diese Aufgabe wird durch ein Heizsystem mit den kennzeichnenden Merkmalen des Anspruches 1 gelöst. Die Unteransprüche beschreiben besonders vorteilhafte Ausgestaltungen der Erfindung.

Die Erfinder haben erkannt, daß die geforderte doppelte Isolierung zwischen elektischer Spannungversorgung und Fahrzeugmasse dadurch erreicht werden kann, daß zwischen einem stromversorgten elektrischen (Heiz-) Widerstand und einem Heizmittelkreislauf für ein konventionelles Klimaaggregat ein Isölierflüssigkeitskreislauf geschaltet ist. Der elektrische Widerstand ist dabei derart in den Isolierflüssigkeitskreislauf geschaltet, daß die in ihm erzeugte Wärmeenergie auf die Isolierflüssigkeit übertragen wird. Der elektrische Widerstand ist gegenüber der Fahrzeugmasse doppelt isoliert aufgehängt. Die Isolierflüssigkeit führt die Wärme des elektrischen Widerstandes zu einem Wärmetauscher ab. In dem Wärmetauscher wird wiederum die Wärme aus der Isolierflüssigkeit in einen Heizmittelkreislauf abgeführt.

Zur Aufrechterhaltung der Potentialtrennung zwischen Isolierflüssigkeitskreislauf und Wärmetauscher ist die Rohrverbindung zwischen Wärmetauscher und elektrischem Widerstand mittels eines isolierenden Zwischenstückes, zum Beispiel einem Silikonschlauch, zur Fahrzeugmasse hin getrennt.

Der Wärmetauscher selbst ist mit dem elektrischen Potential der Fahrzeugmasse verbunden. Er wird primärseitig von der Isolierflüssigkeit durchströmt, die wiederum durch den elektrischen Widerstand aufgeheizt wird, und auf der Sekundärseite wird der Wärmetauscher dann mit einem Heizmittel durchströmt. Dieses Heizmittel kann zum Beispiel ein Gefrierschutz - Wassergemisch sein. Das so erwärmte Heizmittel wird dann einem konventionellen Klimaaggregat zugeführt.

Der elektrische Widerstand kann durch die Oberspannungsleitung stromversorgt werden. Eine besondere Energieeinsparung kann jedoch dadurch erzielt werden, daß der elektrische Widerstand derart mit einer elektrischen Bremsvorrichtung verschaltet ist, daß er durch die beim Bremsen erzeugte elektrische Energie stromversorgt wird. Besonders vorteilhaft können beide Systeme kombiniert werden, so daß eine Stromversorung einerseits durch die Oberspannungsleitung und andererseits durch die Bremse möglich ist.

Besonders vorteilhaft wird bei jedem Bremsen mittels des erfindungsgemäßen Heizsystems die Temperatur des Heizmittels heraufgesetzt, während sie beim Nichtbremsbetrieb indirekt mittels des elektrischen Widerstands, der dann durch die Oberspannungsleitung stromversorgt wird, auf einem konstanten tieferem Niveau gehalten wird.

Die Erfindung wird nachfolgend anhand eines Ausführungsbeispieles und der dazugehörigen Zeichnung näher erläutert.

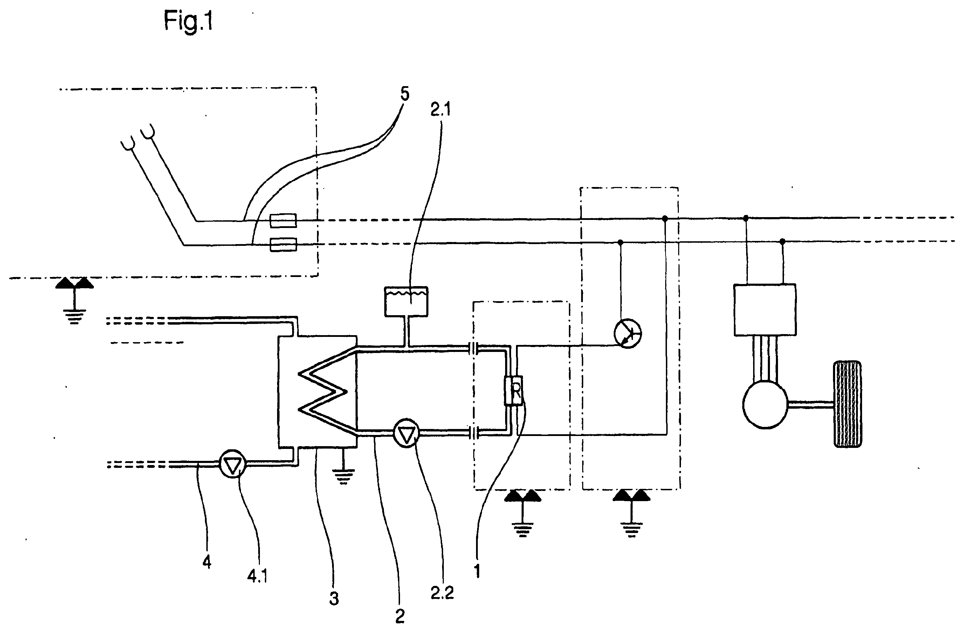

Figur 1 zeigt ein erfindungsgemäßes Heizsystem. Zu erkennen ist ein elektrischer Widerstand 1, der über einen Spannungssteller mit der Oberspannungsleitung 5 verschaltet ist. Mittels des elektrischen Widerstandes 1 wird ein Isolierflüssigkeitskreislauf 2 aufgeheizt. In den Isolierflüssigkeitskreislauf 2 ist ein Ausgleichsbehälter 2.1 eingebracht, zum Ausgleich der temperaturbedingten Volumenschwankungen des Heizmittels. Weiterhin ist eine Pumpe 2.2 zum Umpumpen der Isolierflüssigkeit im Isolierflüssigkeitskreislauf 2 eingebracht.

Die Wärmeenergie des Isolierflüssigkeitskreislaufes 2 wird mittels eines Wärmetauschers 3 in einen Heizmittelkreislauf 4 abgeführt. Im Heizmittefkreislauf 4 ist eine Pumpe 4.1 zur Umwälzung des Heizmittels eingebracht. Durch das Heizmittel kann ein konventionelles Klimaaggregat mit Wärme versorgt werden.

Die oberspannungsleitungversorgten elektrischen Bauteile sind doppelt isoliert aufgehängt. Der Wärmetauscher 3 ist mit der Fahrzeugmasse des Fahrzeuges verbunden. Der Isolierflüssigkeitskreislauf 2 liegt auf einem anderen elektrischen Potential als der Wärmetauscher. Der elektrische Widerstand 1 bzw. die Oberleitungspannungsversorgung liegen auf einem wiederum anderen elektrischen Potential als der Isolierflüssigkeitskreislauf.

### Bezugszeichenliste

- 1: elektrischer Widerstand
- 2: Isolierflüssigkeitskreislauf
- 2.1: Ausgleichsbehälter
- 2.2: Pumpe
- 3: Wärmetauscher
- 4: Heizmittelkreislauf
- 4.1: Pumpe
- 5: Oberspannungsleitung

## Patentansprüche

1. Heizsystem für elektrisch angetriebene, insbesondere für oberleitungsspannungsversorgte Fahrzeuge;
1.1 mit einem stromversorgten elektrischen Widerstand (1);
1.2 mit einem Isolierflüssigkeitskreislauf (2);
1.3 mit einem Wärmetauscher (3);
1.4 mit einem Heizmittelkreislauf (4);
wobei
1.5 der elektrische Widerstand (1) derart in den Isolierflüssigkeitskreislauf (2) geschaltet ist, daß im elektrischen Widerstand (1) erzeugte Wärmeenergie auf die Isolierflüssigkeit übertragen wird;
1.6 der Isolierflüssigkeitskreislauf (2) und der Heizmittelkreislauf (4) Mittels des Wärmetauschers (3) derart verschaltet sind, daß ein Wärmeübergang vom Isolierflüssigkeitskreislauf (2) auf den Heizmittelkreislauf (4) stattfindet;
**dadurch gekennzeichnet daß**
1.7 der Wärmetauscher (3) mit dem elektrischen Potential der Fahrzeugmasse verbunden ist;
1.8 der Isolierflüssigkeitskreislauf (2) derart gegenüber dem Wärmetauscher (3) isoliert ist, daß er auf einem anderen elektrischen Potential als der Wärmetauscher (3) liegt;
1.9 der elektrische Widerstand (1) derart gegenüber der Fahrzeugmasse isoliert aufgehängt ist, daß er auf einem anderen elektrischen Potential als der Isolierflüssigkeitskreislauf (2) liegt.

2. Heizsystem nach Anspruch 1, **dadurch gekennzeichnet, daß** der elektrische Widerstand (1) durch die Oberspannungsleitung (5) stromversorgt wird.

3. Heizsystem nach Anspruch 1, **dadurch gekennzeichnet, daß** der elektrische Widerstand (1) mit einer elektrischen Bremsvorrichtung derart verschaltet ist, daß er beim Bremsen durch die Bremse mittelbar oder unmittelbar stromversorgt wird.

4. Heizsystem nach Anspruch 3, **dadurch gekennzeichnet, daß** die Bremsvorrichtung beim Bremsen derart mit einem Stromspeicher verschaltet ist, daß die elektrische Energie zunächst gespeichert wird.

5. Heizsystem nach einem der Ansprüche 2 bis 4, **dadurch gekennzeichnet, daß** die Stromversorgung über die Oberspannungsleitung (5) und über die Bremse miteinander kombiniert ist.

## Revendications

1. Système de chauffage pour des véhicules électriques, notamment pour des véhicules à prise de courant par fil aérien ;
1.1 avec une résistance électrique (1) alimentée en courant ;
1.2 avec un circuit de liquide isolant (2) ;
1.3 avec un échangeur de chaleur (3) ;
1.4 avec un circuit de fluide de chauffage (4) ;
1.5 où la résistance électrique (1) est montée de telle sorte dans le circuit de liquide isolant (2) que l'énergie thermique générée dans la résistance électrique (1) est transmise au liquide isolant ;
1.6 le circuit de liquide isolant (2) et le circuit de fluide de chauffage (4) sont reliés entre eux au moyen de l'échangeur de chaleur (3) de telle sorte qu'un transfert de chaleur a lieu depuis le circuit de liquide isolant (2) vers le circuit de fluide de chauffage (4) ;
**caractérisé en ce que**
1.7 l'échangeur de chaleur (3) est relié au potentiel électrique de la masse du véhicule ;
1.8 le circuit de liquide isolant (2) est isolé de telle sorte par rapport à l'échangeur de chaleur (3) qu'il a un potentiel électrique différent de celui de l'échangeur de chaleur (3) ;
1.9 la résistance électrique (1) est suspendue et isolée de telle manière par rapport à la masse du véhicule qu'elle a un potentiel électrique différent de celui du circuit de liquide isolant (2).

2. Système de chauffage selon la revendication 1, **caractérisé en ce que** la résistance électrique (1) est alimentée en courant par le fil aérien (5).

3. Système de chauffage selon la revendication 1, **caractérisé en ce que** la résistance électrique (1) est reliée de telle sorte à un dispositif de freinage électrique qu'elle est directement ou indirectement alimentée en courant par le frein lors du freinage.

4. Système de chauffage selon la revendication 3, **caractérisé en ce que** le frein est relié de telle sorte à un accumulateur de courant lors du freinage que l'énergie électrique est d'abord accumulée.

5. Système de chauffage selon l'une quelconque des revendications 2 à 4, **caractérisé en ce que** l'alimentation en courant par le fil aérien (5) et celle par le frein sont combinées.

## Claims

1. A heating system for electrically driven vehicles, especially for such supplied by contact line;
1.1 with a current-supplied electric resistor (1);
1.2 with an insulating liquid circulation (2);
1.3 with a heat exchanger (3);
1.4 with a heating agent circulation (4);
1.5 with the electric resistor (1) being switched in such a way in the insulating liquid circulation (2) that heat energy generated in the electric resistor (1) is transmitted to the insulating liquid;
1.6 the insulating liquid circulation (2) and the heating agent circulation (4) are switched in such a way by means of a heat exchanger (3) that a heat transmission occurs from the insulating liquid circulation (2) to the heating agent circulation (4);
**characterized in that**
1.7 the heat exchanger (3) is connected with the electric potential of the vehicle chassis;
1.8 the insulating liquid circulation (2) is insulated from the heat exchanger (3) in such a way that it lies on a different electric potential than the heat exchanger (3);
1.9 the electric resistor (1) is suspended in an insulated manner relative to the vehicle chassis that it lies on a different electric potential than the insulating liquid circulation (2);

2. A heating system according to claim 1, **characterized in that** the electric resistor (1) is supplied with current through the overhead line (5).

3. A heating system according to claim 1, **characterized in that** the electric resistor (1) is switched together with an electric braking apparatus that on braking it is supplied with current by the brake directly or indirectly.

4. A heating system according to claim 3, **characterized in that** the braking apparatus is switched together with a storage battery during braking in such a way that the electric energy is stored at first.

5. A heating system according to one of the claims 2 to 4, **characterized in that** the power supply via the contact line (5) and via the brake are combined with each other.
